# EUROPEAN PATENT SPECIFICATION

(11) **EP 3 115 867 B1**
(45) Date of publication and mention of the grant of the patent: **28.11.2018**
(21) Application number: 16178741.1
(22) Date of filing: 08.07.2016
(51) Int. Cl.: G06F 1/16, G06F 3/03, G06F 3/0346

(54) **AN APPARATUS AND METHOD FOR A HYBRID SECONDARY SCREEN SMART COVER WITH E-INK**
VORRICHTUNG UND VERFAHREN FÜR EINE INTELLIGENTE ABDECKUNG EINES HYBRIDEN SEKUNDÄREN BILDSCHIRMS MIT E-TINTE
APPAREIL ET PROCÉDÉ PERMETTANT UNE COUVERTURE À PUCE À ÉCRAN SECONDAIRE HYBRIDE AVEC DE L'ENCRE ÉLECTRONIQUE

(30) Priority: 10.07.2015 US 201514796371; 01.02.2016 KR 20160012369
(43) Date of publication of application: 11.01.2017
(73) Proprietor: Samsung Electronics Co., Ltd., Gyeonggi-do 16677 (KR)
(72) Inventor: PENKE, Siva, San Jose, CA 95134 (US); BOGGALA, Siva, San Jose, CA 95133 (US)
(74) Representative: HGF Limited

(56) References cited:
- EP-A1- 2 426 597
- EP-A2- 2 799 950
- US-A1- 2012 194 448

## Description

### TECHNICAL FIELD

The present application relates generally to a cover attachable to a mobile device and, more specifically, to a hybrid secondary screen smart cover with an e-ink display.

### BACKGROUND

Consumers desire longer battery lives of mobile devices. Certain applications on a mobile device consume more energy using the interface on the mobile device than required for the functions they provide.

US-2012/0194448-A1 discloses a tablet device with a flexible cover, wherein thin flexible display technology is integrated into the flexible cover.

### SUMMARY

In accordance with a first aspect of the present invention, a cover device for assisting an electronic device is provided, the cover device comprising: a first panel comprising a first display unit and a second display unit; and at least one processor operatively coupled to the first panel; wherein the at least one processor is configured to: receive, from the electronic device, information for an application corresponding to an object which is selected from among at least one object for executing at least one application which is installed in the electronic device; and display, on the second display unit, a content related to the received information for the application by using electronic ink; and wherein the first display unit is: a transparent window arranged to overlay a display of the electronic device, and the at least one object is displayed on the display of the electronic device and shown through the first display unit; or a dedicated display, and the at least one object is displayed on the first display unit.

In accordance with a second aspect of the present invention, an apparatus is provided, the apparatus comprising: an electronic device; and a cover device according to the first aspect of the present invention.

In accordance with a third aspect of the present invention, a method for a cover device assisting an electronic device is provided, the method comprising: receiving, from the electronic device, information for an application corresponding to an object which is selected from among at least one object for executing at least one application which is installed in the electronic device; and displaying, on a second display unit included in a first panel of the cover device, a content related to the received information for the application by using electronic ink; wherein the first panel includes a first display unit; and wherein the first display unit is: a transparent window arranged to overlay a display of the electronic device, and the at least one object is displayed on the display of the electronic device and shown through the first display unit; or a dedicated display, and the at least one object is displayed on the first display unit.

Also disclosed is a cover device. The cover device comprises a first panel comprising a first display unit and a second display unit, wherein the first display unit is configured to display at least one object for executing at least one application which is installed in the electronic device and provide, to the electronic device, information for an object which is selected among the at least one object, and wherein the second display unit is configured to display an user interface (UI) corresponding to the information by using e-ink.

Also disclosed is an apparatus. The apparatus comprises an electronic device and a cover device for assisting the electronic device, wherein the cover device comprises a first panel comprising a first display unit and a second display unit, wherein the first display unit is configured to display at least one object for executing at least one application which is installed in the electronic device, and provide, to the electronic device, information for an object which is selected among the at least one object, and wherein the second display unit is configured to display an user interface (UI) corresponding to the information by using e-ink.

Also disclosed is a method for a cover device assisting an electronic device. The method comprises displaying, by a first display unit included in a first panel, at least one object for executing at least one application which is installed in the electronic device, providing, by the first display unit, information for an object which is selected among the at least one object to the electronic device, and displaying, by a second display unit included in the first panel, an user interface (UI) corresponding to the information by using e-ink.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Definitions for other certain words and phrases are provided throughout this patent document. Those of ordinary skill in the art should understand that in many if not most instances, such definitions apply to prior as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 illustrates an example mobile device according to this disclosure;
FIGURE 2 illustrates electronic components found in the hybrid cover according to this disclosure;
FIGURE 3 illustrates a hybrid cover according to this disclosure;
FIGURE 4 illustrates a hybrid cover with an e-ink display according to this disclosure;
FIGURE 5 illustrates a hybrid cover with an application running the e-ink display according to this disclosure;
FIGURE 6 is a flow diagram illustrating a mobile device controlling an e-ink display located on a cover attached to the mobile device according to an embodiment; and
FIGURE 7 is a flow diagram illustrating a mobile device controlling an e-ink display located on a cover attached to the mobile device according to another embodiment.

### DETAILED DESCRIPTION

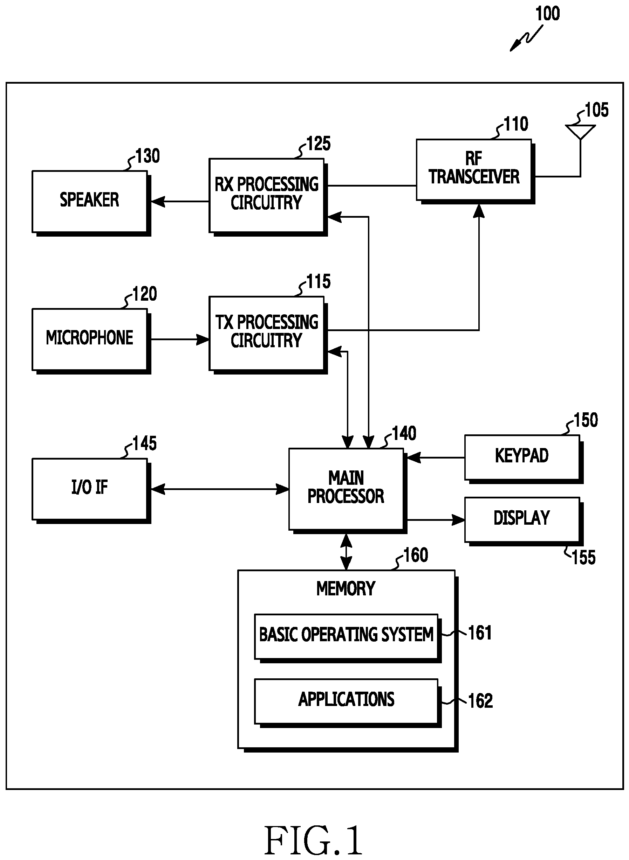

FIGURES 1 through 7, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device.

FIGURE 1 illustrates an example mobile device 100 according to this disclosure.

As shown in FIGURE 1, the mobile device 100 includes an antenna 105, a radio frequency (RF) transceiver 110, transmit (TX) processing circuitry 115, a microphone 120, and receive (RX) processing circuitry 125. The mobile device 100 also includes a speaker 130, a main processor 140, an input/output (I/O) interface (IF) 145, a keypad 150, a display 155, and a memory 160. The memory 160 includes a basic operating system (OS) program 161 and one or more applications 162.

The RF transceiver 110 receives, from the antenna 105, an incoming RF signal transmitted by another component in a system. The RF transceiver 110 down-converts the incoming RF signal to generate an intermediate frequency (IF) or baseband signal. The IF or baseband signal is sent to the RX processing circuitry 125, which generates a processed baseband signal by filtering, decoding, and/or digitizing the baseband or IF signal. The RX processing circuitry 125 transmits the processed baseband signal to the speaker 130 (such as for voice data) or to the main processor 140 for further processing (such as for web browsing data).

The TX processing circuitry 115 receives analog or digital voice data from the microphone 120 or other outgoing baseband data (such as web data, e-mail, or interactive video game data) from the main processor 140. The TX processing circuitry 115 encodes, multiplexes, and/or digitizes the outgoing baseband data to generate a processed baseband or IF signal. The RF transceiver 110 receives the outgoing processed baseband or IF signal from the TX processing circuitry 115 and up-converts the baseband or IF signal to an RF signal that is transmitted via the antenna 105.

The main processor 140 can include one or more processors or other processing devices and execute the basic OS program 161 stored in the memory 160 in order to control the overall operation of the mobile device 100. For example, the main processor 140 could control the reception of forward channel signals and the transmission of reverse channel signals by the RF transceiver 110, the RX processing circuitry 125, and the TX processing circuitry 115 in accordance with well-known principles. In some embodiments, the main processor 140 includes at least one microprocessor or microcontroller.

The main processor 140 is also capable of executing other processes and programs resident in the memory 160, such as operations for unlocking an electronic device with an authenticated wearable device. The main processor 140 can move data into or out of the memory 160 as required by an executing process. In some embodiments, the main processor 140 is configured to execute the applications 162 based on the OS program 161 or in response to signals received from external devices or an operator. The main processor 140 is also coupled to the I/O IF 145, which provides the mobile device 100 with the ability to connect to other devices such as laptop computers and handheld computers. The I/O IF 145 is the communication path between these accessories and the main controller 140.

The main processor 140 is also coupled to the keypad 150 and the display unit 155. The operator of the mobile device 100 can use the keypad 150 to enter data into the mobile device 100. The display 155 may be a liquid crystal display or other display capable of rendering text and/or at least limited graphics, such as from web sites.

The memory 160 is coupled to the main processor 140. Part of the memory 160 could include a random access memory (RAM), and another part of the memory 160 could include a Flash memory or other read-only memory (ROM).

Although FIGURE 1 illustrates an example of a device in a computing system, various changes may be made to FIGURE 1. For example, various components in FIGURE 1 could be combined, further subdivided, or omitted and additional components could be added according to particular needs. As a particular example, the main processor 140 could be divided into multiple processors, such as one or more central processing units (CPUs) and one or more graphics processing units (GPUs). Also, while FIGURE 1 illustrates the mobile device 100 configured as a mobile telephone or smartphone, mobile devices could be configured to operate as other types of mobile or stationary devices. In addition, as with computing and communication networks, mobile devices and servers can come in a wide variety of configurations, and FIGURE 1 does not limit this disclosure to any particular mobile device or server.

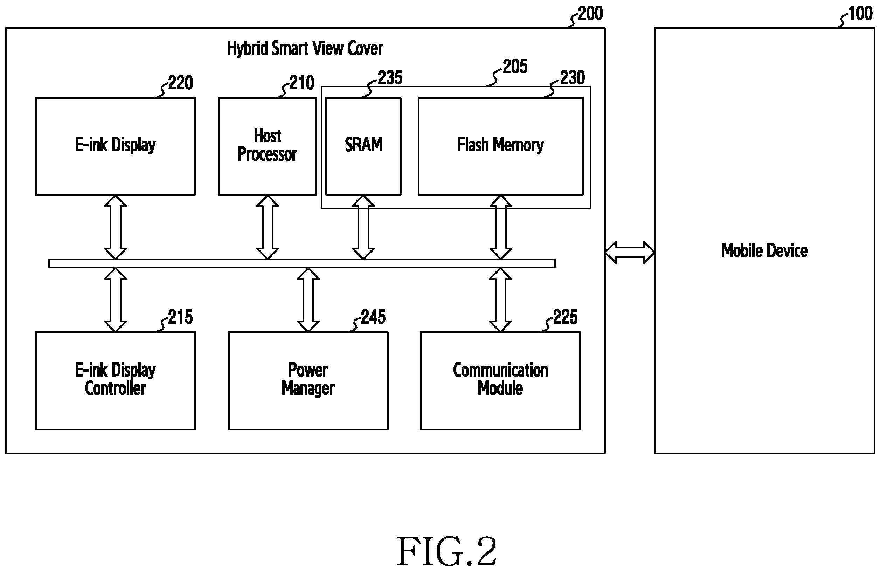

FIGURE 2 illustrates electronic components found in the hybrid cover 200 according to this disclosure. The embodiments shown in FIGURE 2 are for illustration only. Other embodiments could be used without departing from the scope of the present disclosure.

As shown in FIGURE 2, the hybrid cover 200 includes a memory 205, a host processor 210, an e-ink display controller 215, an e-ink display 220, a power manager 245, and a communications module 225. The memory 205 includes a flash memory 230 and a static random access memory (SRAM) 235.

The host processor 210 can include one or more processors or other processing devices and execute the basic e-ink display driver software stored in the memory 205 in order to control the overall operation of the hybrid cover 200, while power manager 245 manages the power requirements of the smart cover. In some embodiments, the host processor 210 includes at least one microprocessor or microcontroller.

The host processor 210 is also capable of executing other processes and programs, such as the e-ink display driver software, resident in the memory 205, such as the flash memory 230 or the SRAM 235. The host processor 210 can move data into or out of the memory 205 as required by an executing process. In some embodiments, the host processor 210 is configured to execute e-ink display driver software based on the OS program or in response to signals received from external devices, such as the mobile device 100, or an operator. The host processor 210 is also operatively coupled to the communications module 225, which provides the hybrid cover 200 with the ability to connect to other devices such as laptop computers and handheld computers.

The host processor 210 is also coupled to the e-ink display 220. The e-ink display 220 may be a liquid crystal display or other displays capable of rendering text and/or at least limited graphics, such as from web sites.

The memory 205 comprises a flash memory 230 and a SRAM 235. The memory 205 is coupled to the host processor 210. Part of the memory 205 could include a random access memory (RAM), and another part of the memory 205 could include a read-only memory (ROM).

Although FIGURE 2 illustrates an example of a device in a computing system, various changes may be made to FIGURE 2. For example, various components in FIGURE 2 could be combined, further subdivided, or omitted and additional components could be added according to particular needs. As a particular example, the host processor 210 could be divided into multiple processors, such as one or more central processing units (CPUs) and one or more graphics processing units (GPUs).

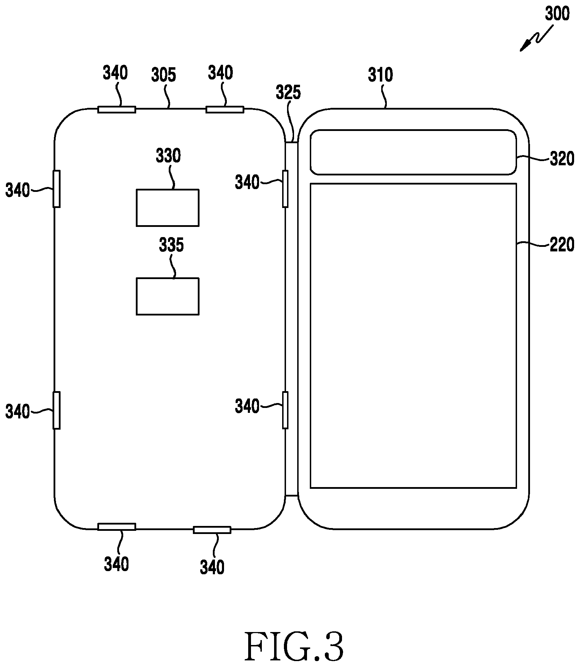

FIGURE 3 illustrates a hybrid cover 300 according to this disclosure. The embodiments shown in FIGURE 3 are for illustration only. Other embodiments could be used without departing from the scope of the present disclosure.

The hybrid cover 300 includes a first panel 305, a second panel 310, an e-ink display 220, and an interface window 320.

The first panel 305 is used to secure the hybrid cover 300 to the mobile device 100. The first panel 305 connects to the outside of a mobile device 100 or replaces a portion of the mobile device's cover. In certain embodiments, the first panel 305 includes interface connections 330 for interfacing the communications module 225 with I/O IF 145 of the mobile device 100 and power connections 335 for charging the hybrid cover 300 from the mobile device 100. The first panel 305 also includes mechanical connections 340 for connecting the mobile device 100. The mechanical connections 340 are used to connect to a mobile device 100 with a back panel, such as a battery cover, removed.

The second panel 310 is used to cover the display of the mobile device 100. The second panel 310 connects to the first panel 305 with a flexible hinge 325. The second panel 310 includes an e-ink display 220 and an interface window 320. The second panel 310 is used to cover and protect a touchscreen 155 of the mobile device 100.

In the illustrated embodiment, the e-ink display 220 and the interface window 320 are located on the same side (i.e., the inside) of the cover as the connections to the mobile device 100. While located on the same side of the hybrid cover 300, the e-ink display 220 is used as a secondary screen and the interface window 320 is a transparent window to allow interaction with the mobile device 100 for controlling the e-ink display 220. When the e-ink display 220 is used as a secondary display on the inside of the hybrid cover 300, the e-ink display 220 can extend across the entire second panel 310 and be controlled by the touchscreen 155 of the mobile device 100 without a separate interface window 320. In certain embodiments, the e-ink display 220 and the interface window 320 are on an opposite side (i.e., the outside) of the hybrid cover 300 compared to the connections. The interface window 320 is either a transparent window to allow interaction with the mobile device 100 to control the e-ink display 220 or is a dedicated display for controlling the e-ink display 220.

The e-ink display 220 is a low-power display that reflects light with or without a backlit panel. Another energy saving benefit of the e-ink display 220 is the display holds text or images indefinitely without electricity. Power is only required to change or alter the contents displayed on the e-ink display 220. The e-ink display 220 can be located on either side of the second panel 310 or on the side of the first panel 305 opposite of the connections. The hybrid cover 300 can include multiple e-ink displays 220.

The interface window 320 controls the applications 162 displaying text and images on the e-ink display 220. The interface window 320 can be a dedicated display interface or a transparent window that allows the user to interact with an interactive portion of the mobile device located beneath the interface window 320. Using the touchscreen 155 of the mobile device 100 reduces the costs of the e-ink display 220 and the extra power consumption required for an e-ink touch screen. Although the requiring a greater power consumption, the e-ink display 220 could also have touch functionality.

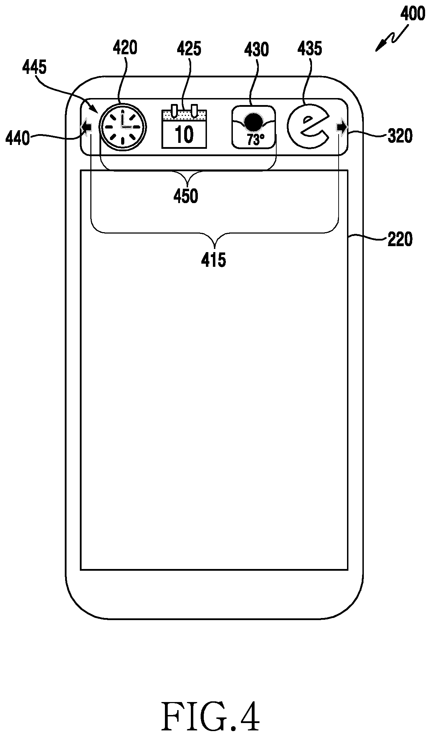

FIGURE 4 illustrates a hybrid cover 400 with an e-ink display 220 according to this disclosure. The embodiments shown in FIGURES 4 are for illustration only. Other embodiments could be used without departing from the scope of the present disclosure.

As depicted in FIGURE 4, the interface window 320 display a number of compatible applications 415 representing applications 162 that are compatible with the e-ink display 220, such as a clock application 420, a calendar application 425, a weather application 430, and other applications 435. The default applications 450 on the main application page 445 can be set by the user. Selecting the other applications 430 opens up the list of other compatible applications 415 loaded on the mobile device 100 that are compatible with the e-ink display 220. When there are more compatible applications 415 than what can fit in the interface window 320, arrows 440 are provided to scroll through different application pages 445. While the hybrid cover 400 is connected to the mobile device 100 and the second panel 310 is covering the touchscreen 155 of the mobile device 100, the touchscreen 155 of the mobile device 100 is turned off except for the portion directly under the interface window 320, or other interaction portion, reducing the power consumed.

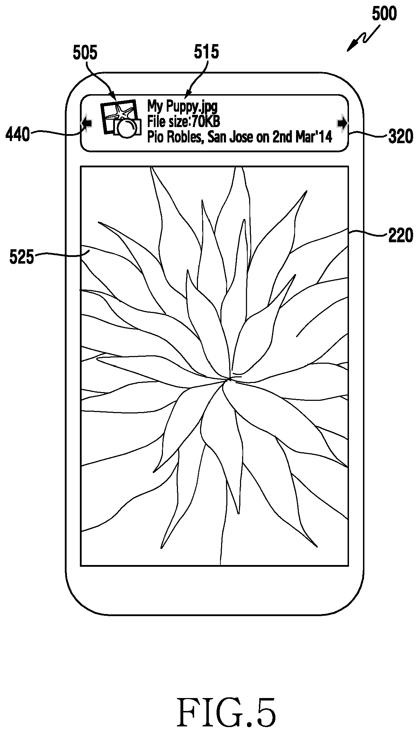

FIGURE 5 illustrates a hybrid cover 500 with an application 505 running the e-ink display 220 according to this disclosure. The embodiments shown in FIGURES 5 are for illustration only. Other embodiments could be used without departing from the scope of the present disclosure.

Once an application icon 505 is chosen from the interface window 320, descriptive text 515 is also displayed in the interface window 320. The application 162 transmits information to the host processor 210 through the communication module 225. The host processor 210 causes the e-ink display controller 215 to produce text or images 525 from the application 162 on the e-ink display 220. The application 162 is controlled through the interface window 320 through arrows 440 or swiping motions. Examples of different applications 162 for the e-ink display 220 include, but are not limited to, task or shopping lists applications, exercise applications, picture gallery, or different e-reading applications. Any physical buttons located on the mobile device 100 can also be used to control the e-ink display 220.

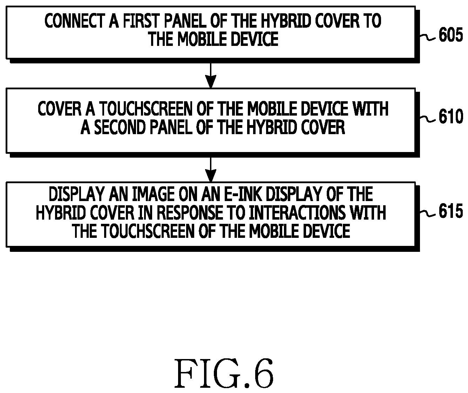

FIGURE 6 is a flow diagram illustrating a mobile device 100 controlling an e-ink display 220 located on a hybrid cover 300 attached to the mobile device 100 according to this disclosure. While the flow chart depicts a series of steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The process depicted in the example is implemented by processing circuitry in, for example, an electronic device, such as the host processor 210.

In operation 605, the first panel 305 of the hybrid cover 300 connects to the mobile device 100. The first panel 305 can fit around the outside of the mobile device 100 or replace a panel of the mobile device 100. When the panel of the mobile device 100 is removed, the first panel 305 mechanically connects to the mobile device 100 using mechanical connections 340 that are the same as the connection from the removed panel. The removed panel of the mobile device 100 exposes I/O IF 145 that connect to the interface connections 330 used to communicate with the mobile device 100 and the power connections 335 used to charge the hybrid cover 300.

In operation 610, the second panel 310 of the hybrid cover 300 covers the touch screen 155 of the mobile device 100. The hybrid cover 300 communicates with the mobile device 100 to deactivate the touchscreen 155 except for an interaction portion covered by the interface window 320. The hybrid cover 300 controls the mobile device 100 to display applications 162 that are compatible with the e-ink display 220. The user can navigate through different compatible applications 415 and control features of a selected compatible application 415 using swipes in the interface window 320.

In operation 615, the e-ink display 220 displays an image 525, in response to selections by a user of the compatible applications 415 within the interface window 320 on the mobile device 100. When a compatible application 415 is selected, the mobile device 100 sends data to the hybrid cover 300 to display an image 525.

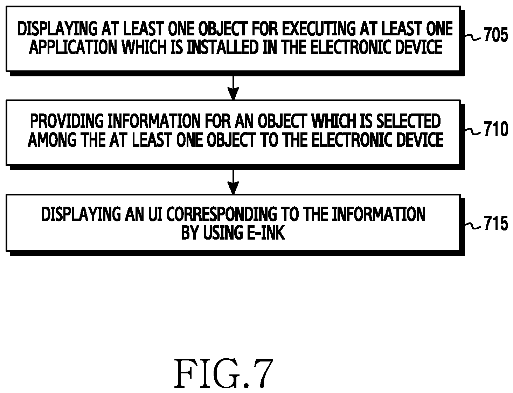

FIGURE 7 is a flow diagram illustrating a mobile device controlling an e-ink display located on a cover attached to the mobile device according to another embodiment.

In operation 705, the first display unit displays at least one object for executing at least one application which is installed in the electronic device. In an example, the first display unit may be the interface window 320. In another example, the first display unit may be interactive portion which interacts with the touchscreen 155. The at least one object may be icon. The electronic device may be the mobile device 100.

In operation 710, the first display unit provides information for an object which is selected among the at least one object to the electronic device.

In operation 715, a second display unit included in the first panel displays an user interface (UI) corresponding to the information by using e-ink. The second display unit may be the e-ink display 220. The UI mat be the image and text generated from the application 162.

Although the present disclosure has been described with an exemplary embodiment, various changes and modifications may be suggested to one skilled in the art. It is intended that the present disclosure encompass such changes and modifications as fall within the scope of the appended claims.

## Claims

1. A cover device (300) for assisting an electronic device (100), the cover device (300) comprising:
a first panel (310) comprising a first display unit (320) and a second display unit (220); and
at least one processor (210) operatively coupled to the first panel (310);
wherein the at least one processor (210) is configured to:
receive, from the electronic device (100), information for an application corresponding to an object which is selected from among at least one object for executing at least one application which is installed in the electronic device (100); and
display, on the second display unit (220), a content related to the received information for the application by using electronic ink; and
wherein the first display unit (320) is:
a transparent window arranged to overlay a display (155) of the electronic device (100), and the at least one object is displayed on the display (155) of the electronic device (100) and shown through the first display unit (320); or
a dedicated display, and the at least one object is displayed on the first display unit (320).

2. The cover device (300) of claim 1, further comprising a second panel (305) for assisting the cover device (300),
wherein the second panel (305) is operatively coupled to the first panel (310).

3. The cover device (300) of claim 2, wherein the second panel (305) comprises:
a power controller (335) configured to control power of the cover device (300); and
a communication module (225) configured to perform communication with the electronic device (100).

4. The cover device (300) of claim 2, wherein the second panel (305) replaces a back panel of the electronic device (100).

5. The cover device (300) of claim 1, wherein the at least one processor (210) is further configured to:
transmit, to the electronic device (100), an indication to activate a display unit of the electronic device (100) corresponding to the first display unit (320) and deactivate a display unit of the electronic device (100) corresponding to the second display unit (220).

6. An apparatus comprising:
an electronic device (100); and
a cover device (300) according to any previous claim.

7. A method for a cover device (300) assisting an electronic device (100), the method comprising:
receiving, from the electronic device (100), information for an application corresponding to an object which is selected from among at least one object for executing at least one application which is installed in the electronic device (100); and
displaying, on a second display unit (220) included in a first panel (310) of the cover device (300), a content related to the received information for the application by using electronic ink;
wherein the first panel (310) includes a first display unit (320); and
wherein the first display unit (320) is:
a transparent window arranged to overlay a display (155) of the electronic device (100), and the at least one object is displayed on a display (155) of the electronic device (100) and shown through the first display unit (320); or
a dedicated display, and the at least one object is displayed on the first display unit (320).

## Patentansprüche

1. Abdeckvorrichtung (300) zum Unterstützen eines elektronischen Geräts (100), wobei die Abdeckvorrichtung (300) Folgendes umfasst:
ein erstes Panel (310) umfassend eine erste Anzeigeeinheit (320) und eine zweite Anzeigeeinheit (220); und
mindestens einen betriebsmäßig mit dem ersten Panel (310) verbundenen Prozessor (210);
wobei der mindestens eine Prozessor (210) dazu konfiguriert ist:
vom elektronischen Gerät (100) Information für eine Anwendung entsprechend einem Objekt zu empfangen, das unter mindestens einem Objekt zum Ausführen von mindestens einer Anwendung ausgewählt wird, die im elektronischen Gerät (100) installiert ist; und
auf der zweiten Anzeigeeinheit (220) einen Inhalt im Zusammenhang mit der empfangenen Information für die Anwendung durch Verwendung von elektronischer Tinte anzuzeigen; und
wobei die erste Anzeigeeinheit (320) Folgendes ist:
ein transparentes Glas, das dazu angeordnet ist, eine Anzeige (155) des elektronischen Geräts (100) zu überdecken, und das mindestens eine Objekt wird auf der Anzeige (155) des elektronischen Geräts (100) angezeigt und durch die erste Anzeigeeinheit (320) gezeigt; oder
eine dedizierte Anzeige, und das mindestens eine Objekt wird auf der ersten Anzeigeeinheit (320) angezeigt.

2. Abdeckvorrichtung (300) nach Anspruch 1, ferner umfassend ein zweites Panel (305) zum Unterstützen der Abdeckvorrichtung (300),
wobei das zweite Panel (305) betriebsmäßig mit dem ersten Panel (310) verbunden ist.

3. Abdeckvorrichtung (300) nach Anspruch 2, wobei das zweite Panel (305) Folgendes umfasst:
einen Leistungs-Controller (335), der dazu konfiguriert ist, Leistung der Abdeckvorrichtung (300) zu steuern; und
ein Kommunikationsmodul (225), das dazu konfiguriert ist, Kommunikation mit dem elektronischen Gerät (100) aufzuführen.

4. Abdeckvorrichtung (300) nach Anspruch 2, wobei das zweite Panel (305) eine Rückwand des elektronischen Geräts (100) ersetzt.

5. Abdeckvorrichtung (300) nach Anspruch 1, wobei der mindestens eine Prozessor (210) ferner dazu konfiguriert ist:
eine Angabe an das elektronische Gerät (100) zu übermitteln, eine Anzeigeeinheit des elektronischen Geräts (100) entsprechend der ersten Anzeigeeinheit (320) zu aktivieren und eine Anzeigeeinheit des elektronischen Geräts (100) entsprechend der zweiten Anzeigeeinheit (220) zu deaktivieren.

6. Einrichtung, umfassend:
ein elektronisches Gerät (100); und
eine Abdeckvorrichtung (300) nach einem der vorhergehenden Ansprüche.

7. Verfahren für eine Abdeckvorrichtung (300), die ein elektronisches Gerät (100) unterstützt, wobei das Verfahren Folgendes umfasst:
Empfangen, vom elektronischen Gerät (100), von Information für eine Anwendung entsprechend einem Objekt, das unter mindestens einem Objekt zum Ausführen von mindestens einer Anwendung ausgewählt wird, die im elektronischen Gerät (100) installiert ist; und
Anzeigen, auf der im ersten Panel (310) der Abdeckvorrichtung (300) enthaltenen zweiten Anzeigeeinheit (220), eines Inhalts im Zusammenhang mit der empfangenen Information für die Anwendung durch Verwendung von elektronischer Tinte;
wobei das erste Panel (310) eine erste Anzeigeeinheit (320) umfasst; und
wobei die erste Anzeigeeinheit (320) Folgendes ist:
ein transparentes Glas, das dazu angeordnet ist, eine Anzeige (155) des elektronischen Geräts (100) zu überdecken, und das mindestens eine Objekt wird auf einer Anzeige (155) des elektronischen Geräts (100) angezeigt und durch die erste Anzeigeeinheit (320) gezeigt; oder
eine dedizierte Anzeige, und das mindestens eine Objekt wird auf der ersten Anzeigeeinheit (320) angezeigt.

## Revendications

1. Dispositif de coque (300) destiné à assister un dispositif électronique (100), le dispositif de coque (300) comprenant :
un premier panneau (310) comprenant une première unité d'affichage (320) et une deuxième unité d'affichage (220) ; et au moins un processeur (210) couplé de manière opérationnelle au premier panneau (310) ; dans lequel l'au moins un processeur (210) est configuré pour :
recevoir, depuis le dispositif électronique (100), une information sur une application correspondant à un objet qui est sélectionné parmi au moins un objet destiné à exécuter au moins une application qui est installée dans le dispositif électronique (100) ; et
afficher, sur la deuxième unité d'affichage (220), un contenu lié à l'information reçue sur l'application en utilisant une encre électronique ; et dans lequel la première unité d'affichage (320) est :
une fenêtre transparente agencée pour recouvrir un affichage (155) du dispositif électronique (100), et l'au moins un objet est affiché sur l'affichage (155) du dispositif électronique (100) et présenté par le biais de la première unité d'affichage (320) ; ou
un affichage dédié, et l'au moins un objet est affiché sur la première unité d'affichage (320).

2. Dispositif de coque (300) selon la revendication 1, comprenant en outre un deuxième panneau (305) destiné à assister le dispositif de coque (300), dans lequel le deuxième panneau (305) est couplé de manière opérationnelle au premier panneau (310).

3. Dispositif de coque (300) selon la revendication 2, dans lequel le deuxième panneau (305) comprend :
une unité de commande d'alimentation (335) configurée pour commander l'alimentation du dispositif de coque (300) ; et
un module de communication (225) configuré pour exécuter une communication avec le dispositif électronique (100).

4. Dispositif de coque (300) selon la revendication 2, dans lequel le deuxième panneau (305) remplace un panneau de dos du dispositif électronique (100).

5. Dispositif de coque (300) selon la revendication 1, dans lequel, l'au moins un processeur (210) est en outre configuré pour :
transmettre, au dispositif électronique (100), une indication d'activer une unité d'affichage du dispositif électronique (100) correspondant à la première unité d'affichage (320) et de désactiver une unité d'affichage du dispositif électronique (100) correspondant à la deuxième unité d'affichage (220).

6. Appareil comprenant :
un dispositif électronique (100) ; et un dispositif de coque (300) selon l'une quelconque des revendications précédentes.

7. Procédé permettant à un dispositif de coque (300) d'assister un dispositif électronique (100), le procédé comprenant :
la réception, depuis le dispositif électronique (100), d'une information sur une application correspondant à un objet qui est sélectionné parmi au moins un objet destiné à exécuter au moins une application qui est installée dans le dispositif électronique (100) ; et
l'affichage, sur une deuxième unité d'affichage (220) incluse dans un premier panneau (310) du dispositif de coque (300), d'un contenu lié à l'information reçue sur l'application en utilisant une encre électronique ; dans lequel le premier panneau (310) inclut une première unité d'affichage (320) ; et dans lequel la première unité d'affichage (320) est :
une fenêtre transparente agencée pour recouvrir un affichage (155) du dispositif électronique (100), et l'au moins un objet est affiché sur un affichage (155) du dispositif électronique (100) et présenté par le biais de la première unité d'affichage (320) ; ou
un affichage dédié, et l'au moins un objet est affiché sur la première unité d'affichage (320).
